# EUROPÄISCHE PATENTSCHRIFT

(11) **EP 3 520 163 B1**
(45) Veröffentlichungstag und Bekanntmachung des Hinweises auf die Patenterteilung: **12.07.2023**
(21) Anmeldenummer: 17768447.9
(22) Anmeldetag: 15.09.2017
(51) Int. Cl.: H01M 10/058, H01M 10/04, H01M 10/0585, H01M 10/0587, H01M 10/0525, H01M 50/46

(54) **VERFAHREN ZUR HERSTELLUNG EINER ELEKTRODENEINHEIT FÜR EINE BATTERIEZELLE UND ELEKTRODENEINHEIT**
METHOD FOR THE MANUFACTURE OF AN ELECTRODE ASSEMBLY AND ELECTRODE ASSEMBLY
MÉTHODE DE FABRICATION D'ENSEMBLE D'ÉLECTRODE ET UN ENSEMBLE D'ÉLECTRODE

(30) Priorität: 27.09.2016 DE 102016218496
(43) Veröffentlichungstag der Anmeldung: 07.08.2019
(73) Patentinhaber: Robert Bosch GmbH, 70442 Stuttgart (DE)
(72) Erfinder: DERRA, Mathias, 97478 Knetzgau (DE); SAUERTEIG, Daniel, 96052 Bamberg (DE); POLLER, Silvan, 02829 Neisseaue Ot Kaltwasser (DE); HEROLD, Juergen, 96260 Weismain (DE)
(86) Internationale Anmeldenummer: PCT/EP2017/073316
(87) Internationale Veröffentlichungsnummer: WO 2018/059972

(56) Entgegenhaltungen:
- CH-A5- 580 341
- DE-A1-102006 054 308
- US-A1- 2010 175 245
- US-A1- 2014 363 727

## Beschreibung

Die Erfindung betrifft ein Verfahren zur Herstellung einer Elektrodeneinheit für eine Batteriezelle, wobei mehrere plattenförmige Segmente einer ersten Elektrode mit einer bandförmigen ersten Separatorschicht stoffschlüssig verbunden, insbesondere verklebt, werden. Die Erfindung betrifft auch eine Elektrodeneinheit für eine Batteriezelle, die nach dem erfindungsgemäßen Verfahren hergestellt ist.

### Stand der Technik

Elektrische Energie ist mittels Batterien speicherbar. Batterien wandeln chemische Reaktionsenergie in elektrische Energie um. Hierbei werden Primärbatterien und Sekundärbatterien unterschieden. Primärbatterien sind nur einmal funktionsfähig, während Sekundärbatterien, die auch als Akkumulator bezeichnet werden, wieder aufladbar sind. In einem Akkumulator finden insbesondere sogenannte Lithium-Ionen-Batteriezellen Verwendung. Diese zeichnen sich unter anderem durch hohe Energiedichten, thermische Stabilität und eine äußerst geringe Selbstentladung aus.

Lithium-lonen-Batteriezellen weisen eine positive Elektrode, die auch als Kathode bezeichnet wird, und eine negative Elektrode, die auch als Anode bezeichnet wird, auf. Die Kathode sowie die Anode umfassen je einen Stromableiter, auf den ein Aktivmaterial aufgebracht ist. Die Elektroden der Batteriezelle sind folienartig ausgebildet und unter Zwischenlage eines Separators, welcher die Anode von der Kathode trennt, zu einem Elektrodenwickel gewunden. Ein solcher Elektrodenwickel wird auch als Jelly-Roll bezeichnet. Die Elektroden können auch zu einem Elektrodenstapel übereinander geschichtet sein oder auf eine andere Art eine Elektrodeneinheit bilden.

Die beiden Elektroden der Elektrodeneinheit sind elektrisch mit Polen der Batteriezelle verbunden, welche auch als Terminals bezeichnet werden. Die Elektroden und der Separator sind von einem in der Regel flüssigen Elektrolyt umgeben. Die Batteriezelle weist ferner ein Zellengehäuse auf, welches beispielsweise aus Aluminium gefertigt ist. Das Zellengehäuse ist in der Regel prismatisch, insbesondere quaderförmig, ausgestaltet und druckfest ausgebildet. Aber auch andere Gehäuseformen, beispielsweise kreiszylindrisch, oder auch flexible Pouchzellen, sind bekannt.

Wesentliche Bestrebung bei der Entwicklung von neuen Batteriezellen ist, das elektrochemische Nutzvolumen in der Zelle zu erhöhen. Als geeignetste Bauform einer Elektrodeneinheit zur Maximierung des Nutzvolumens hat sich der Elektrodenstapel herausgestellt, da dieser sowohl ideal prismatisch als auch in einer beliebigen anderen Geometrie hergestellt werden kann.

In Abhängigkeit vom Ladezustand und Alterungszustand der Elektrodeneinheit kann es zu einer Expansion der Elektroden kommen, was in vollständig gewickelten Elektrodeneinheiten zu Verschiebungen, Delaminationen und Heterogenitäten im Bereich der Rundungen führen kann. Derartige Alterungsprozesse sind bei Elektrodenstapeln ebenfalls minimiert. Durch eine homogene Kraftwirkung auf die Elektroden, was den Kontaktverlust der Elektroden und des Separators verhindert, kann eine maximale Lebensdauer der Elektrodeneinheit erreicht werden.

Aus der DE 10 2006 054 308 A1 ist eine Elektrodenanordnung bekannt, bei der die Elektroden im Randbereich durch eine stoffschlüssige Klebeverbindung auf dem Separator fixiert werden. Die Klebepunkte liegen dabei auf dem Aktivmaterial der Elektroden.

Die DE 10 2009 013 345 A1 beschreibt ebenfalls eine Elektrodenanordnung, bei der die Elektroden im Randbereich durch eine stoffschlüssige Klebeverbindung auf dem Separator fixiert werden. Es wird eine Variante aufgezeigt, bei der die Elektrodeneinheit durch seitliche umlaufende Klebestreifen fixiert werden.

Außerdem sind Klebepunkte an den Ecken der Elektroden und Kleberaupen an den Längsseiten aufgezeigt.

Die WO 2001/059870 A1 beschreibt einen Aufbau der Elektrodeneinheit, bei denen Subelemente aus vereinzelten Elektroden und Separatoren hergestellt werden. Diese Subelemente werden dann durch Z-Faltung mit einem kontinuierlichen Separator zu einer fertigen Elektrodeneinheit prozessiert. Bei der Herstellung der Subelemente werden die Separatorlagen durch Lamination auf die Elektroden aufgebracht.

In der US 2013/0059183 A1 ist eine Batterie mit einer Elektrodeneinheit offenbart. Die Elektrodeneinheit umfasst dabei eine bandförmige Anode und eine bandförmige Kathode, welche mit einem bandförmigen Separator verklebt sind. Die Verklebung findet vorzugsweise in zwei streifenförmigen Bereichen auf den Stromableitern der Elektroden statt.

Die US 2010/0175245 A1 offenbart ein Verfahren zur Herstellung eines Elektrodenstapels für eine Batteriezelle. Dabei wird Klebstoff auf den Stromableiter einer Elektrode aufgebracht und die Elektrode wird so mit einem Separator verklebt. Auf den Stromableiter der anderen Elektrode wird ebenfalls Klebstoff aufgebracht, und die andere Elektrode wird mit einem weiteren Separator verklebt.

Aus der US 2010/0196167 A1 geht eine Elektrodeneinheit für eine Batteriezelle sowie ein Verfahren zur Herstellung der Elektrodeneinheit hervor. Dabei wird die Kathode einem ersten Separator verklebt, und die Anode wird mit einem zweiten Separator verklebt.

Auch die EP 2 958 179 A1 offenbart eine Elektrodeneinheit für Batteriezellen sowie ein Verfahren zur Herstellung der Elektrodeneinheit. Dabei werden bandförmige Elektroden zu plattenförmigen Segmenten geschnitten und auf bandförmigen Separatoren angeordnet. Die beiden Separatoren mit den Elektrodensegmenten werden dann miteinander verklebt. Die miteinander verklebten Separatoren mit den Elektrodensegmenten werden anschließend geschnitten und gestapelt.

### Offenbarung der Erfindung

Es wird ein Verfahren zur Herstellung einer Elektrodeneinheit für eine Batteriezelle vorgeschlagen. Das Verfahren umfasst dabei mindestens die nachfolgend aufgeführten Schritte.

In einem ersten Schritt werden Kontaktfahnen mehrerer plattenförmiger Segmente einer ersten Elektrode mit einer bandförmigen ersten Separatorschicht stoffschlüssig verbunden. Bei der ersten Elektrode kann es sich dabei um eine Anode ebenso wie um eine Kathode handeln. Als stoffschlüssige Verbindungen kommen insbesondere Kleben, aber auch beispielsweise ein Aufschmelzen in Frage.

Die erste Separatorschicht ist flach und bandförmig ausgebildet. Das bedeutet in diesem Zusammenhang, dass eine Ausdehnung der ersten Separatorschicht in eine Längsrichtung viel größer, insbesondere mindestens zehnmal größer, ist als eine Ausdehnung der ersten Separatorschicht in eine Querrichtung, welche rechtwinklig zu der Längsrichtung orientiert ist.

Die Segmente der ersten Elektrode sind flach und plattenförmig ausgebildet. Das bedeutet in diesem Zusammenhang, dass eine Ausdehnung eines Segments der ersten Elektrode in Längsrichtung annähernd gleich groß, insbesondere mindestens halb so groß und höchstens doppelt so groß, ist wie eine Ausdehnung der Segments der ersten Elektrode in Querrichtung.

Die Segmente der ersten Elektrode umfassen jeweils einen Stromableiter, der als metallische Folie ausgebildet ist, und auf welchen ein Aktivmaterial, vorzugsweise beidseitig, aufgebracht ist. Von dem Stromableiter ragt dabei eine Kontaktfahne weg, welche nicht mit dem Aktivmaterial beschichtet, also frei von dem Aktivmaterial, ist. Die Kontaktfahnen der Segmente der ersten Elektrode dienen zum Kontaktieren der Segmente der ersten Elektrode miteinander sowie mit einem Terminal der Batteriezelle.

Insbesondere werden ausschließlich die Kontaktfahnen der Segmente der ersten Elektrode mit der ersten Separatorschicht stoffschlüssig verbunden. Eine unmittelbare Verbindung des Aktivmaterials der Segmente der ersten Elektrode mit der ersten Separatorschicht ist also nicht vorgesehen.

In einem zweiten Schritt wird eine bandförmige zweite Separatorschicht mit den Kontaktfahnen der Segmente der ersten Elektrode stoffschlüssig verbunden, oder eine bandförmige zweite Separatorschicht wird mit der ersten Separatorschicht stoffschlüssig verbunden. Eine unmittelbare Verbindung des Aktivmaterials der Segmente der ersten Elektrode mit der zweiten Separatorschicht ist ebenfalls nicht vorgesehen.

Dabei entsteht ein bandförmiges Verbundelement, welches die erste Separatorschicht, die zweite Separatorschicht und die Segmente der ersten Elektrode umfasst. Die Segmente der ersten Elektrode sind dabei weitgehend zwischen den beiden Separatorschichten angeordnet. Dabei ist das Aktivmaterial der Segmente der ersten Elektrode von der ersten Separatorschicht und von der zweiten Separatorschicht umgeben. Die Kontaktfahnen der Segmente der ersten Elektrode ragen zwischen den beiden Separatorschichten heraus und sind von außen kontaktierbar.

In einem dritten Schritt werden mehrere plattenförmige Segmente einer zweiten Elektrode auf dem Verbundelement angeordnet. Dabei werden die erste und die zweite Separatorschicht derart bandförmig ausgeführt, dass die mehreren plattenförmigen Segmente der ersten und der zweiten Elektrode beabstandet zueinander auf zumindest einer der Separatorschichten angeordnet sind. Wenn die erste Elektrode die Anode ist, ist die zweite Elektrode die Kathode. Wenn die erste Elektrode die Kathode ist, ist die zweite Elektrode die Anode.

Die Segmente der zweiten Elektrode werden dabei auf einer den Segmenten der ersten Elektrode abgewandten Seite der ersten Separatorschicht oder der zweiten Separatorschicht angeordnet. Zwischen einem Segment der ersten Elektrode und einem Segment der zweiten Elektrode befindet sich somit immer eine der beiden Separatorschichten.

Die erste Separatorschicht und die zweite Separatorschicht können beispielsweise getrennt voneinander als separate Folien ausgebildet sein. Die erste Separatorschicht und die zweite Separatorschicht können aber auch als einstückige Folie ausgebildet sein. Die zweite Separatorschicht wird in diesem Fall nach dem ersten Schritt entlang der Längsachse um 180° relativ zu der ersten Separatorschicht umgebogen und im zweiten Schritt auf die Segmente der ersten Elektrode gelegt.

Gemäß einer vorteilhaften Ausführungsform der Erfindung wird während des dritten Schritts das Verbundelement zwischen den Segmenten der ersten Elektrode in alternierende Richtungen gefaltet. Diese Operation wird auch als "Z-Falten" bezeichnet. In dem dritten Schritt werden dann die Segmente der zweiten Elektrode alternierend auf der ersten Separatorschicht und auf der zweiten Separatorschicht des Verbundelements angeordnet. Die Segmente der zweiten Elektrode liegen somit beidseitig jeweils an der ersten Separatorschicht oder an der zweiten Separatorschicht an.

Gemäß einer anderen vorteilhaften Ausführungsform der Erfindung wird während des dritten Schritts das Verbundelement zwischen den Segmenten der ersten Elektrode in die gleiche Richtung gefaltet. Diese Operation ähnelt einem Wickeln, wobei aber die Segmente der ersten Elektrode flach bleiben und keine Wölbung erfahren. In dem dritten Schritt werden dann die Segmente der zweiten Elektrode auf der ersten Separatorschicht angeordnet und von der zweiten Separatorschicht bedeckt, oder die Segmente der zweiten Elektrode werden auf der zweiten Separatorschicht angeordnet und von der ersten Separatorschicht bedeckt. Die Segmente der zweiten Elektrode liegen somit jeweils zwischen der ersten Separatorschicht und der zweiten Separatorschicht.

Gemäß einer weiteren vorteilhaften Ausführungsform der Erfindung wird während des dritten Schritts das Verbundelement zwischen den Segmenten der ersten Elektrode getrennt. Diese Operation wird auch als "Vereinzelung" bezeichnet. Durch die Vereinzelung entstehen einzelne Verbundsegmente, welche jeweils ein Segment der ersten Elektrode aufweisen. In dem dritten Schritt werden dann die Verbundsegmente und die Segmente der zweiten Elektrode alternierend gestapelt. Die Segmente der zweiten Elektrode liegen somit jeweils zwischen der ersten Separatorschicht und der zweiten Separatorschicht.

Gemäß einer vorteilhaften Ausführungsvariante wird vor dem ersten Schritt ein streifenförmiger erster Klebefilm auf die erste Separatorschicht, insbesondere in einem Randbereich, aufgebracht. Die Kontaktfahnen der Segmente der ersten Elektrode werden dann in dem ersten Schritt mittels des ersten Klebefilms mit der ersten Separatorschicht verklebt. In dem zweiten Schritt wird die zweite Separatorschicht dann mittels des ersten Klebefilms mit der ersten Separatorschicht verklebt.

Gemäß einer alternativen vorteilhaften Ausführungsvariante wird vor dem ersten Schritt je ein streifenförmiger dritter Klebefilm beidseitig auf die Kontaktfahnen der Segmente der ersten Elektrode, insbesondere in einem Randbereich, aufgebracht. Die Kontaktfahnen der Segmente der ersten Elektrode werden dann in dem ersten Schritt mittels des dritten Klebefilms mit der ersten Separatorschicht verklebt. In dem zweiten Schritt wird die zweite Separatorschicht mittels des dritten Klebefilms mit den Kontaktfahnen der Segmente der ersten Elektrode verklebt.

Vorzugsweise werden auch die Kontaktfahnen der Segmente der zweiten Elektrode mit dem Verbundelement, insbesondere mit einer Separatorschicht stoffschlüssig verbunden, vorzugsweise verklebt.

Dazu wird beispielsweise vor dem dritten Schritt ein streifenförmiger zweiter Klebefilm auf die zweite Separatorschicht, insbesondere in einem Randbereich, aufgebracht. In dem dritten Schritt werden dann die Kontaktfahnen der Segmente der zweiten Elektrode mittels des zweiten Klebefilms mit der zweiten Separatorschicht verklebt.

Alternativ wird vor dem dritten Schritt ein streifenförmiger vierter Klebefilm auf die Kontaktfahnen der Segmente der zweiten Elektrode, insbesondere in einem Randbereich, aufgebracht. In dem dritten Schritt werden dann die Kontaktfahnen der Segmente der zweiten Elektrode mittels des vierten Klebefilms mit der zweiten Separatorschicht verklebt.

Es wird auch eine Elektrodeneinheit für eine Batteriezelle vorgeschlagen, die nach dem erfindungsgemäßen Verfahren hergestellt ist.

Eine erfindungsgemäße Elektrodeneinheit findet vorteilhaft Verwendung in einer Batteriezelle in einem Elektrofahrzeug (EV), in einem Hybridfahrzeug (HEV), in einem Plug-In-Hybridfahrzeug (PHEV) oder in einem Consumer-Elektronik-Produkt. Unter Consumer-Elektronik-Produkten sind insbesondere Mobiltelefone, Tablet-PCs oder Notebooks zu verstehen.

### Vorteile der Erfindung

Das erfindungsgemäße Verfahren gestattet eine präzise Positionierung der Segmente der Elektroden relativ zu den Separatorschichten. Dadurch ist insbesondere ein kontinuierlicher Herstellprozess mit verhältnismäßig hoher Prozessgeschwindigkeit und geringen Fertigungstoleranzen realisierbar. Das erfindungsgemäße Verfahren gestattet die Herstellung der Elektrodeneinheit unter anderem durch Z-Falten, Wickeln oder Stapeln. Das erfindungsgemäße Verfahren ist auch auf verschiedene Arten von Separatorschichten, unter anderem auf keramisch beschichtete Separatoren und Faserseparatoren, anwendbar.

Vorteilhaft sind die Aktivmaterialien der Elektroden dabei frei von Klebstoff, wodurch der Klebstoff der Klebefilme keinen negativen Einfluss auf das elektrochemische Verhalten der Elektrodeneinheit hat. Insbesondere verursacht der Klebstoff keine Erhöhung des Innenwiderstands der Elektrodeneinheit. Somit werden Leistungsfähigkeit und Alterungsverhalten der Elektrodeneinheit vorteilhaft verbessert.

Ferner schützen die Klebefilme die Elektrodeneinheit vor dem Eindringen von Fremdpartikeln, beispielsweise von Spänen. Zusätzlich trägt der Klebstoff zur mechanischen Fixierung der Separatorschichten bei und verhindert, insbesondere bei übermäßiger thermischer Belastung, ein Schrumpfen der Separatorschichten. Dadurch ist die Sicherheit der Elektrodeneinheit sowie der Batteriezelle weiter erhöht.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung einer Batteriezelle,
- Figur 2: Schritte zur Herstellung einer Elektrodeneinheit gemäß einer ersten Ausführungsvariante,
- Figur 3: Schritte zur Herstellung einer Elektrodeneinheit gemäß einer zweiten Ausführungsvariante,
- Figur 4: eine schematische Schnittdarstellung einer durch Z-Falten hergestellten Elektrodeneinheit,
- Figur 5: eine schematische Schnittdarstellung einer durch Wickeln hergestellten Elektrodeneinheit und
- Figur 6: eine schematische Schnittdarstellung einer durch Stapeln hergestellten Elektrodeneinheit.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

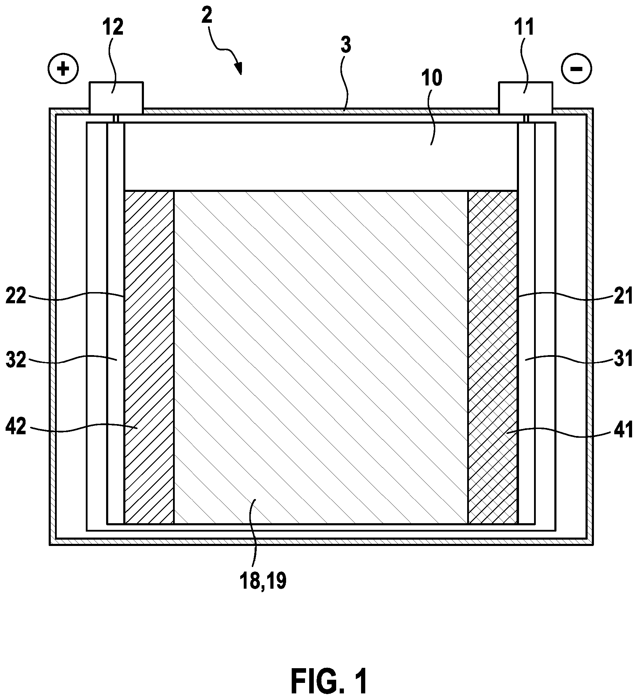

Figur 1 zeigt eine schematische Darstellung einer Batteriezelle 2. Die Batteriezelle 2 umfasst ein Gehäuse 3, welches prismatisch, vorliegend quaderförmig, ausgebildet ist. Das Gehäuse 3 ist vorliegend elektrisch leitend ausgeführt und beispielsweise aus Aluminium gefertigt.

Die Batteriezelle 2 umfasst ein negatives Terminal 11 und ein positives Terminal 12. Über die Terminals 11, 12 kann eine von der Batteriezelle 2 zur Verfügung gestellte Spannung abgegriffen werden. Ferner kann die Batteriezelle 2 über die Terminals 11, 12 auch geladen werden.

Innerhalb des Gehäuses 3 der Batteriezelle 2 ist eine Elektrodeneinheit 10 angeordnet, welche vorliegend als Elektrodenstapel ausgeführt ist. Die Elektrodeneinheit 10 weist zwei Elektroden, nämlich eine Anode 21 und eine Kathode 22, auf. Die Anode 21 und die Kathode 22 sind jeweils folienartig ausgeführt und durch mindestens eine Separatorschicht 18, 19 voneinander separiert. Der mindestens eine Separatorschicht 18, 19 ist ionisch leitfähig, also für Lithiumionen durchlässig.

Die Anode 21 umfasst ein anodisches Aktivmaterial 41 und einen Stromableiter 31. Der Stromableiter 31 der Anode 21 ist elektrisch leitfähig ausgeführt und aus einem Metall gefertigt, beispielsweise aus Kupfer. Der Stromableiter 31 der Anode 21 ist elektrisch mit dem negativen Terminal 11 der Batteriezelle 2 verbunden.

Die Kathode 22 umfasst ein kathodisches Aktivmaterial 42 und einen Stromableiter 32. Der Stromableiter 32 der Kathode 22 ist elektrisch leitfähig ausgeführt und aus einem Metall gefertigt, beispielsweise aus Aluminium. Der Stromableiter 32 der Kathode 22 ist elektrisch mit dem positiven Terminal 12 der Batteriezelle 2 verbunden.

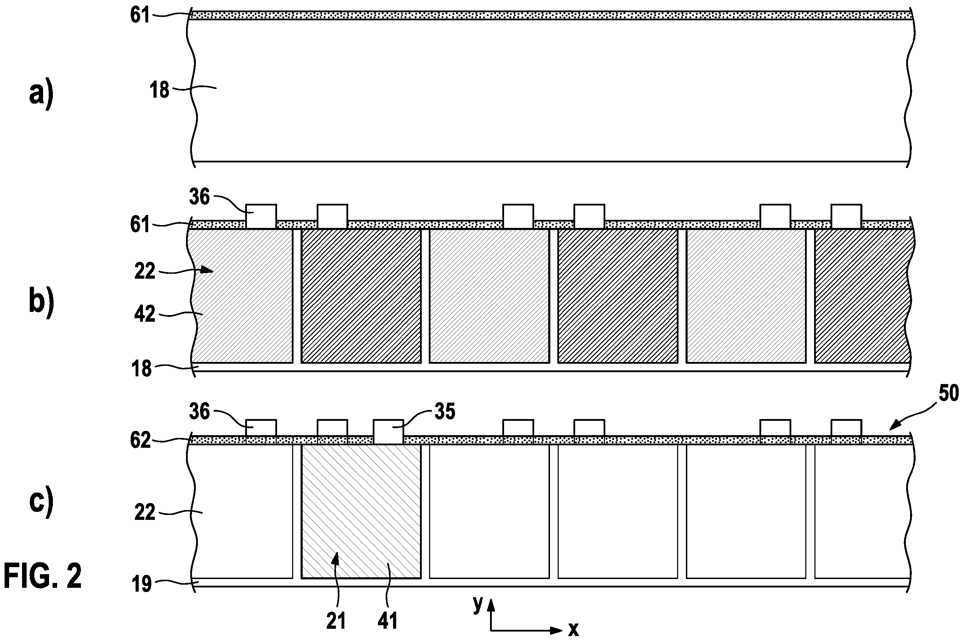

In Figur 2 sind Schritte zur Herstellung einer Elektrodeneinheit 10 gemäß einer ersten Ausführungsvariante dargestellt. Wie in Teilfigur 2a) gezeigt, wird ein erster Klebefilm 61 auf einen Randbereich einer bandförmig ausgebildeten ersten Separatorschicht 18 appliziert. Unter einer bandförmigen Ausbildung ist im Folgenden zu verstehen, dass eine Ausdehnung in eine Längsrichtung x viel größer ist als eine Ausdehnung in eine Querrichtung y, welche rechtwinklig zu der Längsrichtung x orientiert ist.

Der erste Klebefilm 61 kann dabei beispielsweise über ein Transferverfahren, als Klebstoffstreifen, als Klebeband oder als Sprühklebstoff aufgebracht werden. Neben Haftklebstoffen können auch auf unterschiedliche Weise aktivierbare Klebstoffe zum Einsatz kommen. In einer weiteren alternativen Ausführungsform kann die erste Separatorschicht 18 auch thermisch aufgeschmolzen werden und so ebenfalls eine stoffschlüssige Verbindung erzeugen.

In Teilfigur 2b) ist gezeigt, wie auf der ersten Separatorschicht 18 mehrere plattenförmig ausgebildete Segmente einer Kathode 22 als erste Elektrode positioniert werden. Unter einer plattenförmigen Ausbildung ist im Folgenden zu verstehen, dass eine Ausdehnung in Längsrichtung x annähernd gleich groß ist wie eine Ausdehnung in Querrichtung y.

Die Segmente der Kathode 22 weisen jeweils einen Stromableiter 32 auf, welcher mit dem kathodischen Aktivmaterial 42 beschichtet ist. Von dem Stromableiter 32 ragt eine Kontaktfahne 36 der Kathode 22 weg, welche nicht beschichtet, also frei von kathodischem Aktivmaterial 42 ist. Die Segmente der Kathode 22 werden derart auf der ersten Separatorschicht 18 positioniert, dass die Kontaktfahnen 36 der Kathode 22 auf dem ersten Klebefilm 61 haften, wodurch die Segmente der Kathode 22 mit der ersten Separatorschicht 18 verklebt werden.

Die Orientierung und Position der einzelnen Segmente der Kathode 22 ist dabei so auf den weiteren Herstellungsprozess der Elektrodeneinheit 10 abgestimmt, dass die Kontaktfahnen 36 der Kathode 22 nach einem folgenden Wickeln, Falten oder Stapeln übereinander liegen. In der vorliegenden Darstellung sind Position und Orientierung für das Z-Falten angepasst.

Anschließend wird, wie in Teilfigur 2c) dargestellt, eine bandförmige zweite Separatorschicht 19 deckungsgleich über die erste Separatorschicht 18 gelegt und mittels des ersten Klebefilms 61 mit der ersten Separatorschicht 18 verklebt. Dadurch entsteht ein bandförmiges Verbundelement 50, welches teiltransparent dargestellt ist. Das Aktivmaterial 42 der Kathode 22 ist dabei von der ersten Separatorschicht 18 und von der zweiten Separatorschicht 19 umgeben, und lediglich die Kontaktfahnen 36 der Kathode 22 ragen zwischen den Separatorschichten 18, 19 heraus.

Vorliegend wird ein zweiter Klebefilm 62 auf einen Randbereich der zweiten Separatorschicht 19 appliziert. Auf der zweiten Separatorschicht 19 des Verbundelements 50 werden dann mehrere plattenförmig ausgebildete Segmente einer Anode 21 als zweite Elektrode positioniert, wobei nur ein Segment der Anode 21 dargestellt ist.

Die Segmente der Anode 21 weisen jeweils einen Stromableiter 31 auf, welcher mit dem anodischen Aktivmaterial 41 beschichtet ist. Von dem Stromableiter 31 ragt eine Kontaktfahne 35 der Anode 21 weg, welche nicht beschichtet, also frei von anodischem Aktivmaterial 41 ist. Die Segmente der Anode 21 werden derart auf der zweiten Separatorschicht 19 positioniert, dass die Kontaktfahnen 35 der Anode 21 auf dem zweiten Klebefilm 62 haften, wodurch die Segmente der Anode 21 mit der zweiten Separatorschicht 19 verklebt werden.

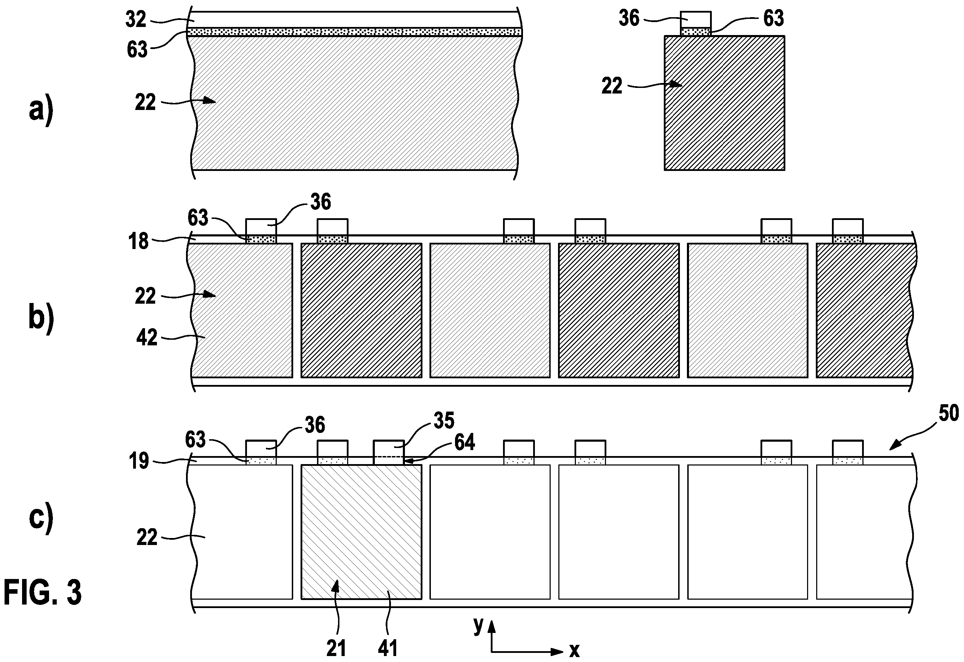

In Figur 3 sind Schritte zur Herstellung einer Elektrodeneinheit 10 gemäß einer zweiten Ausführungsvariante dargestellt. Wie in Teilfigur 3a) gezeigt, wird ein dritter Klebefilm 63 beidseitig auf einen Rand des unbeschichteten Stromableiters 32 einer bandförmigen Kathode 22 appliziert. Der dritte Klebefilm 63 kann dabei beispielsweise über ein Transferverfahren, als Klebstoffstreifen, als Klebeband oder als Sprühklebstoff aufgebracht werden. Aus der bandförmigen Kathode 22 werden durch Vereinzeln plattenförmig ausgebildete Segmente der Kathode 22 hergestellt. Die Kontaktfahnen 36 der Segmente der Kathode 22 sind dabei mit dem dritten Klebefilm 63 versehen.

Die Segmente der Kathode 22 werden als erste Elektrode auf die bandförmige erste Separatorschicht 18 aufgebracht, wie in Teilfigur 3b) dargestellt ist. Dabei werden die Kontaktfahnen 36 der Segmente der Kathode 22 mittels des dritten Klebefilms 63 mit der ersten Separatorschicht 18 verklebt.

Die Orientierung und Position der einzelnen Segmente der Kathode 22 ist dabei so auf den weiteren Herstellungsprozess der Elektrodeneinheit 10 abgestimmt, dass die Kontaktfahnen 36 der Kathode 22 nach dem folgenden Wickeln, Falten oder Stapeln übereinander liegen. In der vorliegenden Darstellung sind Position und Orientierung für das Z-Falten angepasst.

Anschließend wird wie in Teilfigur 3c) dargestellt, die bandförmige zweite Separatorschicht 19 deckungsgleich über die erste Separatorschicht 18 gelegt und mittels des dritten Klebefilms 63 mit den Kontaktfahnen 36 der Segmente der ersten Kathode 22 verklebt. Dadurch entsteht ein bandförmiges Verbundelement 50, welches teiltransparent dargestellt ist. Das Aktivmaterial 42 der Kathode 22 ist dabei von der ersten Separatorschicht 18 und von der zweiten Separatorschicht 19 umgeben, und lediglich die Kontaktfahnen 36 der Kathode 22 ragen zwischen den Separatorschichten 18, 19 heraus.

Auf der zweiten Separatorschicht 19 des Verbundelements 50 werden dann mehrere plattenförmig ausgebildete Segmente der Anode 21 als zweite Elektrode positioniert, wobei nur ein Segment der Anode 21 dargestellt ist. Zuvor wird ein vierter Klebefilm 64 auf einen Randbereich der Kontaktfahnen 35 der Segmente der Anode 21 appliziert. Die Segmente der Anode 21 werden derart auf der zweiten Separatorschicht 19 positioniert, dass die Kontaktfahnen 35 der Anode 21 mittels des vierten Klebefilms 64 mit der zweiten Separatorschicht 19 verklebt werden.

Der erste Klebefilm 61, der zweite Klebefilm 62, der dritte Klebefilm 63 sowie der vierte Klebefilm 64 können bei der ersten Ausführungsvariante und bei der zweiten Ausführungsvariante beispielsweise als polyolefin-basierte Schmelzklebstoffe oder als Klebstoffe auf Acrylatbasis ausgeführt sein. Außerdem können die Klebstoffe keramische Füllmaterialien enthalten, beispielsweise Al₂O₃.

Der erste Klebefilm 61, der zweite Klebefilm 62, der dritte Klebefilm 63 sowie der vierte Klebefilm 64 werden bevorzugt in einer Breite von 2 mm oder weniger aufgetragen. Die Breite der Klebefilme 61, 62, 63, 64 entspricht dabei deren Ausdehnung in Querrichtung y.

Auch ist es denkbar, anstelle von streifenförmigen Klebefilmen 61, 62, 63, 64 Klebstoffpunkte zu verwenden. Solche Klebstoffpunkte haben vorzugsweise einen Durchmesser vom maximal 2 mm und sind vorzugsweise maximal 20 mm voneinander beabstandet angeordnet. Das Auftragen solcher Klebstoffpunkte kann beispielsweise mittels eines Verfahrens erfolgen, welches als "Jetten" bekannt ist.

Der zweite Klebefilm 62 bei der ersten Ausführungsvariante sowie der vierte Klebefilm 64 bei der zweiten Ausführungsvariante können auch entfallen und die plattenförmig ausgebildeten Segmente der Anode 21 als zweite Elektrode können einfach auf der zweiten Separatorschicht 19 des Verbundelements 50 positioniert werden.

Bei der ersten Ausführungsvariante ebenso wie bei der zweiten Ausführungsvariante können die Segmente der Anode 21 als zweite Elektrode derart positioniert werden, dass die Kontaktfahnen 35 der Anode 21 in die gleiche Richtung weisen wie die Kontaktfahnen 36 der Kathode 22. Ebenso können die Segmente der Anode 21 als zweite Elektrode derart positioniert werden, dass die Kontaktfahnen 35 der Anode 21 in die entgegengesetzte Richtung weisen wie die Kontaktfahnen 36 der Kathode 22.

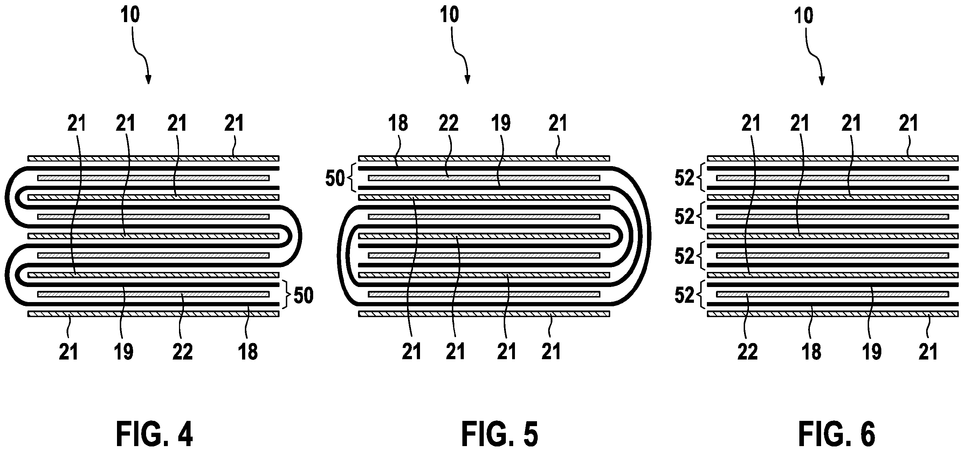

Figur 4 zeigt eine schematische Schnittdarstellung einer durch Z-Falten hergestellten Elektrodeneinheit 10. Das Verbundelement 50 wird dabei zwischen den Segmenten der Kathode 22 in alternierende Richtungen gefaltet. Die Segmente der Anode 21 werden alternierend auf der ersten Separatorschicht 18 und auf der zweiten Separatorschicht 19 angeordnet.

Figur 5 zeigt eine schematische Schnittdarstellung einer durch Wickeln hergestellten Elektrodeneinheit 10. Das Verbundelement 50 wird dabei zwischen den Segmenten der Kathode 22 stets in die gleiche Richtung gefaltet. Die Segmente der Anode 21 werden auf einer der beiden Separatorschichten 18, 19 angeordnet und beim Wickeln von der anderen der beiden Separatorschichten 18, 19 bedeckt. Die Segmente der Anode 21 liegen danach jeweils zwischen der ersten Separatorschicht 18 und der zweiten Separatorschicht 19 des Verbundelements 50. Lediglich das zentral gelegene Segment der Anode 21 ist ausschließlich von der zweiten Separatorschicht 19 umgeben.

Figur 6 zeigt eine schematische Schnittdarstellung einer durch Stapeln hergestellten Elektrodeneinheit 10. Das Verbundelement 50 wird dabei zwischen den Segmenten der Kathode 22 getrennt. Durch diese Vereinzelung entstehen Verbundsegmente 52, welche jeweils ein Segment der Kathode 22 aufweisen. Die Verbundsegmente 52 und die Segmente der Anode 21 werden dann alternierend gestapelt. Die Segmente der Anode 21 liegen danach jeweils zwischen der ersten Separatorschicht 18 und der zweiten Separatorschicht 19 der Verbundsegmente 52.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Herstellung einer Elektrodeneinheit (10) für eine Batteriezelle (2), umfassend folgende Schritte:
- stoffschlüssiges Verbinden
von Kontaktfahnen (35, 36) mehrerer plattenförmiger Segmente einer ersten Elektrode (21, 22)
mit einer bandförmigen ersten Separatorschicht (18),
- stoffschlüssiges Verbinden
einer bandförmigen zweiten Separatorschicht (19) mit den Kontaktfahnen (35, 36) der Segmente der ersten Elektrode (21, 22) oder
mit der ersten Separatorschicht (18), so dass ein bandförmiges Verbundelement (50) entsteht, wobei ein Aktivmaterial (41, 42) der Segmente der ersten Elektrode (21, 22) von der ersten Separatorschicht (18) und von der zweiten Separatorschicht (19) umgeben ist,
- Anordnen mehrerer plattenförmiger Segmente einer zweiten Elektrode (21, 22) auf dem Verbundelement (50), wobei die erste und die zweite Separatorschicht (18, 19) derart bandförmig ausgeführt werden, dass die mehreren plattenförmigen Segmente der ersten und der zweiten Elektrode (21, 22) beabstandet zueinander auf zumindest einer der Separatorschichten (18, 19) angeordnet sind.

2. Verfahren nach Anspruch 1, wobei
das Verbundelement (50) zwischen den Segmenten der ersten Elektrode (21, 22) in alternierende Richtungen gefaltet wird, und wobei die Segmente der zweiten Elektrode (21, 22) alternierend auf der ersten Separatorschicht (18) und auf der zweiten Separatorschicht (19) angeordnet werden.

3. Verfahren nach Anspruch 1, wobei
das Verbundelement (50) zwischen den Segmenten der ersten Elektrode (21, 22) in die gleiche Richtung gefaltet wird, und wobei die Segmente der zweiten Elektrode (21, 22) auf der ersten Separatorschicht (18) oder auf der zweiten Separatorschicht (19) angeordnet werden.

4. Verfahren nach Anspruch 1, wobei
das Verbundelement (50) zwischen den Segmenten der ersten Elektrode (21, 22) getrennt wird, so dass Verbundsegmente (52) entstehen, und wobei
die Verbundsegmente (52) und die Segmente der zweiten Elektrode (21, 22) alternierend gestapelt werden.

5. Verfahren nach einem der vorstehenden Ansprüche, wobei
ein streifenförmiger erster Klebefilm (61) auf die erste Separatorschicht (18) aufgebracht wird,
die Kontaktfahnen (35, 36) der Segmente der ersten Elektrode (21, 22) mittels des ersten Klebefilms (61) mit der ersten Separatorschicht (18) verklebt werden, und
die zweite Separatorschicht (19) mittels des ersten Klebefilms (61) mit der ersten Separatorschicht (18) verklebt wird.

6. Verfahren nach einem der Ansprüche 1 bis 4, wobei
je ein streifenförmiger dritter Klebefilm (63) beidseitig auf die Kontaktfahnen (35, 36) der Segmente der ersten Elektrode (21, 22) aufgebracht wird,
die Kontaktfahnen (35, 36) der Segmente der ersten Elektrode (21, 22) mittels des dritten Klebefilms (63) mit der ersten Separatorschicht (18) verklebt werden, und
die zweite Separatorschicht (19) mittels des dritten Klebefilms (63) mit den Kontaktfahnen (35, 36) der Segmente der ersten Elektrode (21, 22) verklebt wird.

7. Verfahren nach einem der vorstehenden Ansprüche, **dadurch**
**gekennzeichnet, dass**
die Kontaktfahnen (35, 36) der Segmente der zweiten Elektrode (21, 22) mit dem Verbundelement (50) stoffschlüssig verbunden, vorzugsweise verklebt, werden.

8. Verfahren nach Anspruch 7, wobei
ein streifenförmiger zweiter Klebefilm (62) auf die zweite Separatorschicht (19) aufgebracht wird, und wobei
die Kontaktfahnen (35, 36) der Segmente der zweiten Elektrode (21, 22) mittels des zweiten Klebefilms (62) mit der zweiten Separatorschicht (19) verklebt werden.

9. Verfahren nach Anspruch 7, wobei
ein streifenförmiger vierter Klebefilm (64) auf die Kontaktfahnen (35, 36) der Segmente der zweiten Elektrode (21, 22) aufgebracht wird, und wobei
die Kontaktfahnen (35, 36) der Segmente der zweiten Elektrode (21, 22) mittels des vierten Klebefilms (64) mit der zweiten Separatorschicht (19) verklebt werden.

10. Elektrodeneinheit (10) für eine Batteriezelle (2), hergestellt nach einem Verfahren nach einem der vorstehenden Ansprüche.

11. Verwendung einer Elektrodeneinheit (10) nach Anspruch 10 in einer Batteriezelle (2) in einem Elektrofahrzeug (EV), in einem Hybridfahrzeug (HEV), in einem Plug-In-Hybridfahrzeug (PHEV) oder in einem Consumer-Elektronik-Produkt.

## Claims

1. Method for producing an electrode unit (10) for a battery cell (2), comprising the following steps:
- substance-to-substance bonding of contact tabs (35, 36) of a plurality of plate-like segments of a first electrode (21, 22) to a band-like first separator layer (18),
- substance-to-substance bonding of a band-like second separator layer (19) to the contact tabs (35, 36) of the segments of the first electrode (21, 22) or to the first separator layer (18) so that a band-like composite element (50) is produced, wherein an active material (41, 42) of the segments of the first electrode (21, 22) is surrounded by the first separator layer (18) and by the second separator layer (19),
- arranging a plurality of plate-like segments of a second electrode (21, 22) on the composite element (50), wherein the first and the second separator layer (18, 19) are constructed in the form of a band in such a way that the plurality of plate-like segments of the first and the second electrode (21, 22) are arranged at a spacing from one another on at least one of the separator layers (18, 19) .

2. Method according to Claim 1, wherein the composite element (50) is folded in alternate directions between the segments of the first electrode (21, 22) and wherein the segments of the second electrode (21, 22) are arranged alternately on the first separator layer (18) and on the second separator layer (19).

3. Method according to Claim 1, wherein the composite element (50) is folded in the same direction between the segments of the first electrode (21, 22) and wherein the segments of the second electrode (21, 22) are arranged on the first separator layer (18) or on the second separator layer (19).

4. Method according to Claim 1, wherein the composite element (50) is separated between the segments of the first electrode (21, 22) so that composite segments (52) are produced, and wherein the composite segments (52) and the segments of the second electrode (21, 22) are stacked alternately.

5. Method according to one of the preceding claims, wherein a strip-like first adhesive film (61) is applied to the first separator layer (18), the contact tabs (35, 36) of the segments of the first electrode (21, 22) are adhesively bonded to the first separator layer (18) by means of the first adhesive film (61), and the second separator layer (19) is adhesively bonded to the first separator layer (18) by means of the first adhesive film (61) .

6. Method according to one of Claims 1 to 4, wherein a respective strip-like third adhesive film (63) is applied to the contact tabs (35, 36) of the segments of the first electrode (21, 22) on both sides, the contact tabs (35, 36) of the segments of the first electrode (21, 22) are adhesively bonded to the first separator layer (18) by means of the third adhesive film (63), and the second separator layer (19) is adhesively bonded to the contact tabs (35, 36) of the segments of the first electrode (21, 22) by means of the third adhesive film (63).

7. Method according to one of the preceding claims, **characterized in that** the contact tabs (35, 36) of the segments of the second electrode (21, 22) are substance-to-substance bonded, preferably adhesively bonded, to the composite element (50).

8. Method according to Claim 7, wherein a strip-like second adhesive film (62) is applied to the second separator layer (19) and wherein the contact tabs (35, 36) of the segments of the second electrode (21, 22) are adhesively bonded to the second separator layer (19) by means of the second adhesive film (62).

9. Method according to Claim 7, wherein a strip-like fourth adhesive film (64) is applied to the contact tabs (35, 36) of the segments of the second electrode (21, 22), and wherein the contact tabs (35, 36) of the segments of the second electrode (21, 22) are adhesively bonded to the second separator layer (19) by means of the fourth adhesive film (64).

10. Electrode unit (10) for a battery cell (2), produced in line with a method according to one of the preceding claims.

11. Use of an electrode unit (10) according to Claim 10 in a battery cell (2) in an electric vehicle (EV), in a hybrid vehicle (HEV), in a plug-in hybrid vehicle (PHEV) or in a consumer electronics product.

## Revendications

1. Procédé de fabrication d'une unité d'électrodes (10) destinée à un élément de batterie (2), ledit procédé comprenant les étapes suivantes :
- relier par une liaison de matière des cosses de contact (35, 36) d'une pluralité de segments en forme de plaque d'une première électrode (21, 22) à une première couche de séparation (18) en forme de bande,
- relier par une liaison de matière une deuxième couche de séparation (19) en forme de bande à des cosses de contact (35, 36) des segments de la première électrode (21, 22) ou à la première couche de séparation (18) de façon à produire un élément composite (50) en forme de bande, un matériau actif (41, 42) des segments de la première électrode (21, 22) étant entouré par la première couche de séparation (18) et par la deuxième couche de séparation (19),
- disposer une pluralité de segments en forme de plaque d'une deuxième électrode (21, 22) sur l'élément composite (50), la première et la deuxième couche de séparation (18, 19) étant conçues sous la forme d'une bande de sorte que la pluralité de segments en forme de plaque de la première et de la seconde électrode (21, 22) sont disposés à distance les uns des autres sur au moins une des couches de séparation (18, 19).

2. Procédé selon la revendication 1, l'élément composite (50) étant plié dans des directions alternées entre les segments de la première électrode (21, 22), et les segments de la deuxième électrode (21, 22) étant disposés de manière alternée sur la première couche de séparation (18) et sur la deuxième couche de séparation (19) .

3. Procédé selon la revendication 1, l'élément composite (50) étant plié dans la même direction entre les segments de la première électrode (21, 22), et les segments de la deuxième électrode (21, 22) étant disposés sur la première couche de séparation (18) ou sur la deuxième couche de séparation (19).

4. Procédé selon la revendication 1, l'élément composite (50) étant séparé entre les segments de la première électrode (21, 22) pour produire des segments composites (52), et les segments composites (52) et les segments de la deuxième électrode (21, 22) étant empilés de manière alternée.

5. Procédé selon l'une des revendications précédentes, un premier film adhésif (61) en forme de ruban étant appliqué sur la première couche de séparation (18), les cosses de contact (35, 36) des segments de la première électrode (21, 22) étant collées à la première couche de séparation (18) au moyen du premier film adhésif (61), et la deuxième couche de séparation (19) étant collée à la première couche de séparation (18) au moyen du premier film adhésif (61).

6. Procédé selon l'une des revendications 1 à 4, un troisième film adhésif (63) en forme de ruban étant appliqué de part et d'autre des cosses de contact (35, 36) des segments de la première électrode (21, 22), les cosses de contact (35, 36) des segments de la première électrode (21, 22) étant collées à la première couche de séparation (18) au moyen du troisième film adhésif (63), et la deuxième couche de séparation (19) étant collée sur les cosses de contact (35, 36) des segments de la première électrode (21, 22) au moyen du troisième film adhésif (63).

7. Procédé selon l'une des revendications précédentes, **caractérisé en ce que** les cosses de contact (35, 36) des segments de la deuxième électrode (21, 22) sont reliées par une liaison de matière, de préférence collées, à l'élément composite (50).

8. Procédé selon la revendication 7, un deuxième film adhésif (62) en forme de bande étant appliqué sur la deuxième couche de séparation (19), et les cosses de contact (35, 36) des segments de la deuxième électrode (21, 22) étant collées à la deuxième couche de séparation (19) au moyen du deuxième film adhésif (62).

9. Procédé selon la revendication 7, un quatrième film adhésif (64) en forme de ruban étant appliqué sur les cosses de contact (35, 36) des segments de la deuxième électrode (21, 22), et les cosses de contact (35, 36) des segments de la deuxième électrode (21, 22) étant collées à la deuxième couche de séparation (19) au moyen du quatrième film adhésif (64).

10. Unité d'électrodes (10) destinée à un élément de batterie (2), ladite unité étant réalisée par un procédé selon l'une des revendications précédentes.

11. Utilisation d'une unité d'électrodes (10) selon la revendication 10 dans une cellule de batterie (2) d'un véhicule électrique (EV), d'un véhicule hybride (HEV), d'un véhicule hybride rechargeable (PHEV) ou d'un produit électronique grand public.
